**Europäisches Patentamt**

(19) **European Patent Office**

**Office européen des brevets**

(11) Publication number : **0 360 381 B1**

# (12) EUROPEAN PATENT SPECIFICATION

(45) Date of publication of patent specification :
02.09.92 Bulletin 92/36

(51) Int. Cl.⁵ : **B60J 10/00, B60R 13/06**

(21) Application number : **89306680.3**

(22) Date of filing : **30.06.89**

(54) Coloured moulding for attachment to a vehicle.

(30) Priority : **19.09.88 US 246511**

(43) Date of publication of application :
**28.03.90 Bulletin 90/13**

(45) Publication of the grant of the patent :
**02.09.92 Bulletin 92/36**

(84) Designated Contracting States :
**DE FR GB IT**

(56) References cited :
**FR-A- 1 342 216**
**FR-A- 2 220 397**

(73) Proprietor : **THE STANDARD PRODUCTS COMPANY**
**2130 West 110th Street**
**Cleveland Ohio 44102 (US)**

(72) Inventor : **Jackson, Norman Charles**
**17291 Westbrook**
**Livonia Michigan 48152 (US)**

(74) Representative : **Jones, Michael Raymond et al**
**HASELTINE LAKE & CO. Hazlitt House 28**
**Southampton Buildings Chancery Lane**
**London WC2A 1AT (GB)**

EP 0 360 381 B1

Jouve, 18, rue Saint-Denis, 75001 PARIS

## Description

The present invention relates to a moulding for attachment to a vehicle. More particularly, the present invention relates to a moulding and weatherstrip which can be colour matched to the surface of a vehicle.

Mouldings or weather strips are well known for use with automotive vehicles and are typically made of synthetic elastomeric materials because of the desirable physical properties of such materials. Such mouldings are generally black in colour, however, because of difficulties encountered when elastomeric material is coloured or painted. Coloured weatherstrips are, however, known. For example, U.S. Patent US-A-4,513,044, issued April 23, 1985, to Shigeki et al. discloses a trim portion having an outer surface covered by a coloured solid rubber layer having a colour. All parts of the weather strip are taught to be formed from the same kind of rubber, such as ethylene-propylene-diene monomer or nitrite based rubber (EPDM or NBR). Coloured elastomeric material generally does not present a high-gloss appearance. The colour does not hold and the elastomeric material has a dull appearance. Thus, heretofore it has not been possible to match the typical high gloss surface colour of vehicles with coloured elastomeric materials.

According to the invention there is provided a moulding (10) for attachment to a vehicle (14) having a coloured surface, wherein the moulding (10) comprises:

a support member (16) capable of being attached to the bottom of a window (12) opening in the door of a vehicle (14);

a first layer (18) which is capable of being provided with a colour substantially similar to that of the coloured surface of the vehicle (14) to which the support member (16) is intended for attachment and which is secured to a first part of the support member (16) so that when the support member (16) is attached to a vehicle (14) the first layer (18) faces the exterior of the vehicle (14); and

a second layer (20) which is of a material capable of effecting a seal and which is secured to a second part of the support member (16) so that when the support member (16) is attached to a vehicle (14) the second layer (20) faces the interior of the vehicle (14) and is able to act as a seal for the window opening.

The support member is preferably provided with a first and a second limb joined by an intermediate portion, the first limb in use being situated in the exterior of the vehicle (14), the second limb in use being situated on the interior of the vehicle (14); the first layer (18) being secured to the first limb and the intermediate portion, and the second layer (20) being secured, adjacent to the first layer (18), to the second limb.

According to the invention there is also provided a method of manufacturing a moulding (10) according to the invention, which method comprises the steps of:

forming the support member (16) to a predetermined configuration by rolling;

applying a first and second adhesive selectively along the support member (16);

heating the support member (16) and adhesives to a predetermined temperature;

securing the first layer (18) to the support member (16) by the first adhesive; and

securing the second layer (20) to the support member (16) by the second adhesive.

The first and second layers can be of similar colours presenting an integral colour matched moulding.

The first colored layer preferably is of a colour which colour matches the exterior colour of the vehicle to which it is to be attached. The subject invention provides a coloured molding which matches the surface colour of the vehicle and can present a high-gloss finish.

Other advantages of the present invention will be readily appreciated as the same becomes better understood by reference to the following detailed description when considered in connection with the accompanying drawings.

Figure 1 is an elevational view of a preferred embodiment of the moulding of the subject invention attached to a vehicle shown broken away.

Figure 2 is a sectional view taken along line 2-2 of Figure 1.

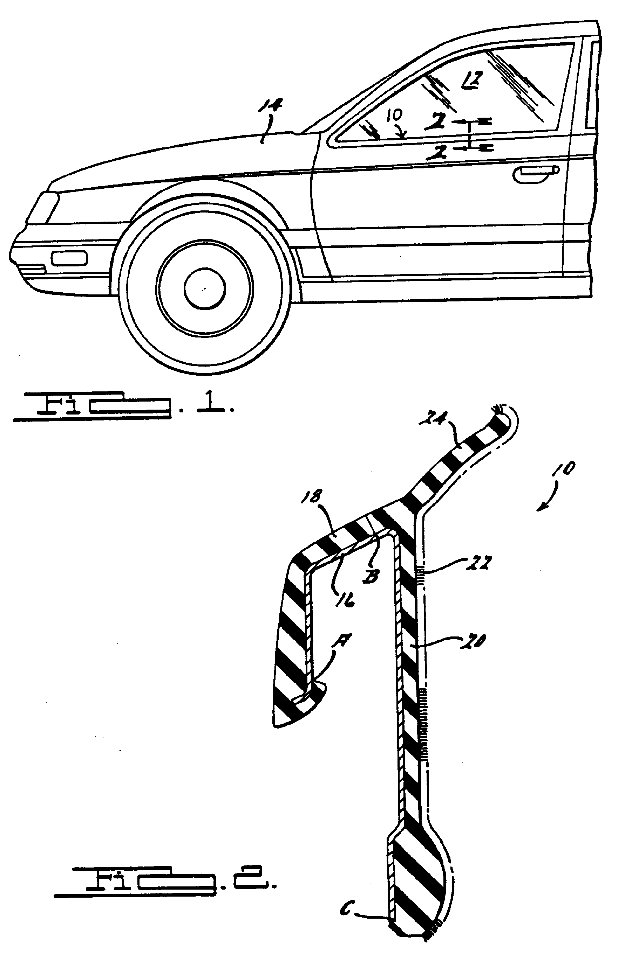

A preferred embodiment of a weather strip or moulding for attachment to a vehicle is generally shown at 10 in Figures 1 and 2. The moulding 10 is typically a belt weather strip at the bottom of the window 12 of the vehicle 14. The moulding 10 includes a metal support member 16 which is generally U-shaped in cross-sectional configuration with one leg longer than the other. A first coloured layer 18 is secured to one side of the support member 16. The first coloured layer 18 is made of a polyvinyl chloride (PVC) material having a shore "A" durometer of 86 ±5. A first adhesive, such as "A1104B", commercially available from B.F. Goodrich, is used to secure the first coloured layer 18 to the support member 16. The first adhesive is applied from point A to B on the support member 16.

The moulding 10 includes a second layer 20 which abuts against one end of the first coloured layer 18 at B and which is secured to the same side surface of the suport member 16 as the first coloured layer 18. The second layer 20 is made of a thermoplastic elastomer material, i.e., a thermoplastic elastomer (TPE) such as "Santoprene #101-64", commercially available from the Monsanto Chemical Company. A second adhesive, such as "Mord-Ad P80", commercially available from Morton Thiokol, Inc., is applied from point B to C on the support member 16 and secures the second layer 20 to the support member 16. TPE comprises rubber and plastic and has the characteristics of a thermoplastic material while also having compression set properties comparable to rubber. Thus TPE is an effective sealant. Preferably the TPE is ultraviolet (UV) light stabilized. Also preferably the first and second layers 18 and 20 have a colour similar to each other.

PVC can be made to colour match the vehicle body paint, including metallics and high-gloss body paint. Layer 18 which is presented to the outside of the vehicle can thus colour match the vehicle body paint. PVC is not a good material for seals because it has poor compression set properties but layer 18 does not have a sealing function. TPE is presently limited in availability to black and lower gloss non-metallic colours. However, layer 20 is presented largely interior of the door. Still, the sealing lip 24 of second layer 20 can be made of a colour compatible to the colour of the layer 18.

The moulding 10 further includes a flock material or low friction coating 22 secured in a conventional manner to a portion of one side of the second layer 20.

A method for making the coloured molding 10 for attahcment to a vehicle 14 comprises the steps of forming the support member 16 to a predetermined configuration, such as a U-shape, by roll-forming. The steps include securing the first coloured layer 18 to the support member 16 and securing the second layer 20 to the support member 16. The steps also include matching the first 18 and second 20 layers so that they have similar colours. The method further includes extruding the first coloured layer 18 of a polymeric material such as PVC and extruding the second layer 20 of an elastomeric and polymeric material such as Santoprene. The steps further include applying a first and second adhesive selectively along the support member 16 to secure the first 18 and second 20 layers to the support member 16, respectively.

The method also includes heating the support member 16 and adhesives to a predetermined temperature and bonding the first 18 and second 20 layers to the support member 16 by curing the adhesive. The steps may further include applying a slip coat on a portion of the second layer 20 by, for example, priming one side of the second layer 20 and applying a third adhesive over the primer and securing a flock material 22 with the third adhesive to the second layer 20. The method also includes extruding the first colour layer of a high gloss PVC and/or PVC of metallic colours to provide a match to the appearance of the vehicle body and trim.

The invention has been described in an illustrative manner, and it is to be understood that the terminology which has been used in intended to be in the nature of words of description rather that of limitation.

Obviously, many modifications and variations of the present invention are possible in light of the above teachings as defined in the claims. It is, therefore, to be understood that within the scope of the appended claims, the invention may be practiced otherwise than as specifically described.

## Claims

1. A moulding for attachment to a vehicle having a coloured surface, wherein the moulding comprises:
   a support member capable of being attached to the bottom of a window opening in the door of a vehicle;
   a first layer which is capable of being provided with a colour substantially similar to that of the coloured surface of the vehicle to which the support member is intended for attachment and which is secured to a first part of the support member so that when the support member is attached to a vehicle the first layer faces the exterior of the vehicle; and
   a second layer which is of a material capable of effecting a seal and which is secured to a second part of the support member so that when the support member is attached to a vehicle the second layer faces the interior of the vehicle and is able to act as a seal for the window opening.

2. A moulding according to claim 1, wherein the second layer is of a thermoplastic elastomeric material.

3. A moulding according to claims 1 or 2, wherein the first layer is of a polymeric material capable of being provided with a high gloss appearance corresponding substantially with the appearance of the coloured surface of the vehicle to which it is intended for attachment.

4. A moulding according to claim 3, wherein the first layer is of a polyvinylchloride.

5. A moulding according to any preceding claim, wherein the second layer is provided with a colour substantially similar to that of the first layer.

6. A moulding according to any preceding claim, wherein the first and second layers are secured to the support member by an adhesive.

7. A moulding according to any preceding claim, which further includes a low friction material, such as flock, provided on at least a part of the second layer.

8. A moulding according to any preceding claim, wherein the support member is of a metal material.

9. A moulding according to any preceding claim, wherein the support member is of a substantially U-shaped configuration.

10. A moulding according to any preceding claim, which is adapted for attachment to a window frame of a vehicle, and wherein the support member is provided with a first and a second limb joined by an intermediate portion, the first limb in use being situated in the exterior of the vehicle, the second limb in use being situated on the interior of the vehicle; the first layer being secured to the first limb and the intermediate portion, and the second layer being secured, adjacent to the first layer, to the second limb.

11. A moulding according to claim 10, wherein the second layer is provided with a protruding member capable of effecting a seal between the exterior of the vehicle and glass situated in the window frame.

12. A method of manufacturing a moulding according to any one of claims 1 to 11, which method comprises the steps of:
    forming the support member to a predetermined configuration by rolling;
    applying a first and second adhesive selectively along the support member;
    heating the support member and adhesives to a predetermined temperature;
    securing the first layer to the support member by the first adhesive; and
    securing the second layer to the support member by the second adhesive.

13. A method according to claim 12, which further includes the steps of:
    priming one side of the second layer;
    applying a third adhesive over the primer; and
    securing a flock material to one side of the second layer by the third adhesive.

**Patentansprüche**

1. Formteil zur Befestigung an einem Fahrzeug, das eine farbige Oberfläche besitzt, mit den folgenden Bestandteilen:
    Einem Trägerelement, das an der Unterseite einer Fensteröffnung in der Tür eines Fahrzeuges befestigt werden kann;
    einer ersten Schicht, die mit einer Farbe versehen werden kann, die im wesentlichen der der farbigen Oberfläche des Fahrzeuges entspricht, an dem das Trägerelement befestigt werden soll, und die an einem ersten Teil des Trägerelementes befestigt ist, so daß bei Befestigung des Trägerelementes an einem Fahrzeug die erste Schicht zur Außenseite des Fahrzeuges weist; und
einer zweiten Schicht, die aus einem Material besteht, das eine Dichtung bewirken kann, und die an einem zweiten Teil des Trägerelementes befestigt ist, so daß bei Befestigung des Trägerelementes an einem Fahrzeug die zweite Schicht zur Innenseite des Fahrzeuges weist und als Dichtung für die Fensteröffnung wirken kann.

2. Formteil nach Anspruch 1, bei dem die zweite Schicht aus einem thermoplastischen elastomeren Material besteht.

3. Formteil nach Anspruch 1 oder 2, bei dem die erste Schicht aus einem polymeren Material besteht, das ein hochglänzendes Aussehen besitzen kann, das im wesentlichen dem Aussehen der farbigen Oberfläche des Fahrzeuges, an der das Formteil befestigt werden soll, entspricht.

4. Formteil nach Anspruch 3, bei dem die erste Schicht aus einem Polyvinylchlorid besteht.

5. Formteil nach einem der vorangehenden Ansprüche, bei dem die zweite Schicht mit einer Farbe versehen ist, die im wesentlichen der der ersten Schicht entspricht.

6. Formteil nach einem der vorangehenden Ansprüche, bei dem die erste und zweite Schicht durch einen Kleber am Trägerelement befestigt sind.

7. Formteil nach einem der vorangehenden Ansprüche, das des weiteren ein Material mit niedriger Reibung, beispielsweise eine Beflockung, umfaßt, das an mindestens einem Teil der zweiten Schicht vorgesehen ist.

8. Formteil nach einem der vorangehenden Ansprüche, bei dem das Trägerelement aus einem metallischen Material besteht.

9. Formteil nach einem der vorangehenden Ansprüche, bei dem das Trägerelement eine im wesentlichen U-förmige Gestalt aufweist.

10. Formteil nach einem der vorangehenden Ansprüche, das zur Befestigung an einem Fensterrahmen eines Fahrzeuges dient und bei dem das Trägerelement mit einem ersten und zweiten Schenkel versehen ist, die über einen Zwischenabschnitt miteinander verbunden sind, wobei der erste Schenkel im Gebrauch an der Außenseite des Fahrzeuges und der zweite Schenkel im Gebrauch an der Innenseite des Fahrzeuges vorgesehen ist und wobei die erste Schicht am ersten Schenkel und dem Zwischenabschnitt und die zweite Schicht benachbart zur ersten Schicht am zweiten Schenkel befestigt ist.

11. Formteil nach Anspruch 10, bei dem die zweite Schicht mit einem vorstehenden Element versehen ist, das eine Dichtung zwischen der Außenseite des Fahrzeuges und der im Fensterrahmen angeordneten Fensterscheibe bewirken kann.

12. Verfahren zur Herstellung eines Formteiles nach einem der Ansprüche 1 bis 11, das die folgenden Schritte umfaßt:

Bringen des Trägerelementes in eine vorgegebene Form durch Walzen;
Aufbringen eines ersten und zweiten Klebers wahlweise entlang dem Trägerelement;
Erhitzen des Trägerelementes und der Kleber auf eine vorgegebene Temperatur;
Befestigen der ersten Schicht am Trägerelement über den ersten Kleber; und
Befestigen der zweiten Schicht am Trägerelement durch den zweiten Kleber.

13. Verfahren nach Anspruch 12, das des weiteren folgende Schritte umfaßt:

Grundieren von einer Seite der zweiten Schicht; Aufbringen eines dritten Klebers über die Grundierung; und Befestigen eines Beflockungsmateriales an einer Seite der zweiten Schicht über den dritten Kleber.

**Revendications**

1. Moulure pour fixation à un véhicule ayant une surface colorée, la moulure comprenant:

un élément de support pouvant être fixé à la base d'un ouverture de fenêtre dans la porte d'un véhicule;

une première couche à laquelle peut être conférée une couleur sensiblement identique à celle de la surface colorée du véhicule auquel l'élément de support est destiné à être fixé et qui est fixée à une première partie de l'élément de support de façon à ce que lorsque l'élément de support est fixé à un véhicule, la première couche soit orientée vers l'extérieur du véhicule; et

une seconde couche constituée d'un matériau pouvant former un joint d'étanchéité et fixée à une seconde partie de l'élément de support de façon à ce que lorsque l'élément de support est fixé à un véhicule, la seconde couche soit orientée vers l'intérieur du véhicule et soit capable de jouer le rôle d'un joint d'étanchéité pour l'ouverture de la fenêtre.

2. Moulure selon la revendication 1, dans laquelle la seconde couche est constituée d'un matériau élastomère thermoplastique.

3. Moulure selon les revendications 1 ou 2, dans laquelle la première couche est constituée d'un matériau polymère auquel il est possible de conférer un aspect brillant correspondant sensiblement à l'aspect de la surface colorée du véhicule auquel il est destiné à être fixé.

4. Moulure selon la revendicaiton 3, dans laquelle la première couche est constituée d'un chlorure de polyvinyle.

5. Moulure selon l'une quelconque des revendications précédentes, dans laquelle on confère à la seconde couche une couleur sensiblement identique à celle de la première couche.

6. Moulure selon l'une quelconque des revendications précédentes, dans laquelle la première et la seconde couches sont fixées à l'élément de support par un adhésif.

7. Moulure selon l'une quelconque des revendications précédentes, comportant en outre un matériau à faible frottement, comme par exemple une bourre, disposé sur au moins une partie de la seconde couche.

8. Moulure selon l'une quelconque des revendications précédentes, dans laquelle l'élément de support est constitué d'un matériau métallique.

9. Moulure selon l'une quelconque des revendications précédentes, dans laquelle l'élément de support a sensiblement la forme d'un U.

10. Moulure selon l'une quelconque des revendications précédentes, qui est adaptée à être fixée au cadre d'une fenêtre d'un véhicule, et dans laquelle l'élément de support est muni d'un premier et d'un second membres reliés par une partie intermédiaire, le premier membre, lorsqu'il est utilisé, étant situé à l'extérieur du véhicule, le second membre, lorsqu'il est utilisé, étant situé à l'intérieur du véhicule; la première couche étant fixée au premier membre et à la partie intermédiaire, et la seconde couche étant fixée, au voisinage de la première couche, au second membre.

11. Moulure selon la revendication 10, dans laquelle la seconde couche est munie d'un élément faisant saillie capable de jouer le rôle de joint d'étanchéité entre l'extérieur du véhicule et une vitre située dans le cadre de fenêtre.

12. Procédé de fabrication d'une moulure selon l'une quelconque des revendications 1 à 11, ce procédé comprenant les étapes consistant à:

réaliser un élément de support selon une configuration prédéterminée par laminage;

appliquer sélectivement un premier et un second adhésifs le long de l'élément de support;

chauffer l'élément de support et les adhésifs à une température prédéterminée;

fixer la première couche à l'élément de support au moyen du premier adhésif; et

fixer la seconde couche à l'élément de support au moyen du second adhésif.

13. Procédé selon la revendication 12, caractérisé en ce qu'il comporte en outre les étapes consistant à:

appliquer un apprêt sur un côté de la seconde couche;

appliquer un troisième adhésif sur l'apprêt; et

fixer un matériau de bourrage à un côté de la seconde couche au moyen du troisième adhésif.

FIG. 1.

FIG. 2.